Europäisches Patentamt

European Patent Office

Office européen des brevets

(11) Publication number: **0 500 218 A1**

# EUROPEAN PATENT APPLICATION

(21) Application number: **92300666.2**

(22) Date of filing: **27.01.92**

(51) Int. Cl.⁵: **B23Q 17/22**, B24B 13/01, B24B 13/00, B24B 13/04

(30) Priority: **19.02.91 US 656941**

(43) Date of publication of application:
**26.08.92 Bulletin 92/35**

(84) Designated Contracting States:
**AT BE CH DE ES FR GB IT LI NL SE**

(71) Applicant: **PILKINGTON VISIONCARE HOLDINGS, INC.**
**2420 Sand Hill Road**
**Menlo Park California 94025(US)**

(72) Inventor: **Chen, Barry**
**8578 Burr Lane**

**San Diego, California 92129(US)**
Inventor: **Lantz, Peter**
**312 Cole Ranch Road**
**Olivenhain, California 92024(US)**
Inventor: **James, Michael D.**
**Rt. 2, Box 845**
**Ft. Gibson, Oklahoma 74434(US)**
Inventor: **Threet, Cleon**
**Rt. 2, Box 92 G**
**Eufaula, Oklahoma 74432(US)**

(74) Representative: **Pendlebury, Anthony et al**
**PAGE, WHITE & FARRER 54 Doughty Street**
**London WC1N 2LS(GB)**

(54) **Apparatus for use in the manufacture of contact lenses.**

(57) Apparatus for use in the manufacture of contact lenses by lathing, and in particular for the calibration of the lathe cutter in a removable mounting block (6) comprises a frame (1); location means (5) to accurately locate the mounting block (6); and two monoscopes (7) mounted in the frame (1) so as to enable the lathe cutter to be accurately located in three dimensional space. The relative position of the location means (5) and the monoscopes (7) may be adjusted with respect to one another.

FIG.1

EP 0 500 218 A1

This invention relates to apparatus for use in the manufacture of contact lenses, and, in particular, to apparatus for use in the manufacture of contact lenses by lathing, either manually or automatically.

Contact lenses have for a number of years been manufactured from small sections of polymer rod by lathing. The lathing of the polymer rod leads to a certain amount of wear on the cutter or cutters used by the lathe. In turn this wear can lead to manufacturing inaccuracies in the contact lenses, and this is wholly unacceptable to the purchaser.

Consequently, in order to maintain the accuracy in the produced product it is necessary to replace the lathe cutter on a regular basis. Now on every occasion that the lathe cutter is replaced it is necessary to calibrate, i.e. correctly set up the cutter, the lathe cutter in the lathe with respect to the product dimensions etc. Normally, this is carried out manually by cutting a button and measuring the dimensions of the cut button. As will be well appreciated this is a time consuming exercise, during which time the lathe is out of the production line.

The present invention is concerned with apparatus which overcomes, or at least drastically reduces, the problems associated with the calibrating of the lathe cutter with respect to the lathe.

In accordance with the present invention there is provided apparatus for use in the manufacture of contact lenses by means of lathes which have a lathe cutter which is held in a removable mounting block, which apparatus enables the lathe cutter to be accurately set up in the mounting block independently from the lathe, and which apparatus comprises:

- a frame;
- location means which is securely mounted on the frame and into which the mounting block may be accurately located;
- two monoscopes mounted in the frame so that the longitudinal axes of the monoscopes are angularly displaced from one another so as to enable reference means on the lathe cutter to be accurately located in three-dimensional space;

wherein the relative position of the location means and the monoscopes may be adjusted with respect to one another.

The use of the present invention in the manufacture of contact lenses enables the lathe cutter to be accurately set/calibrated in the mounting block independently from the lathe, and consequently when it becomes expedient to change the lathe cutters, the mounting blocks are simply interchanged. In this way, the lathe cutter which is being placed into the lathe has already been calibrated for operation on the lathe, and the lathe is immediately ready for the production of contact lenses, consequently the down time of the lathe is drastically reduced.

In a preferred embodiment of the present invention, the frame comprises four plates which are securely fixed to one another so as to form a hollow structure of substantially rectangular construction wherein the two monoscopes are mounted in adjacent plates of the frame so that the longitudinal axes of the monoscopes are 90° angularly displaced from one another.

It should be noted that although in this preferred case the longitudinal axes of the monoscopes are 90° angularly displaced from one another this is not critical to the operation of apparatus made in accordance with the present invention. It is however important that there is a degree of angular displacement which is sufficient to enable accurate location of the lathe cutter in three-dimensional space.

Preferably, each of the monoscopes is movable relative to the frame.

In a preferred arrangement each of the monoscopes is mounted in a second plate which is secured to the appropriate part of the frame through which the monoscope extends so that some movement of the second plate relative to the frame is permissible and locking means is provided which secures the position of the second plate relative to the frame, and also allows the position of the second plate relative to the frame to be controllably adjusted. Preferably, the locking means comprises a skirt member which has two side sections and two end sections, each of which sections is provided with two sets of bolts which extend through the section and one of which set of bolts acts against the second plate and the other of which acts against the frame in the area adjacent to the second plate.

The invention will now be illustrated by way of description of an example as illustrated in the accompanying drawings, in which:

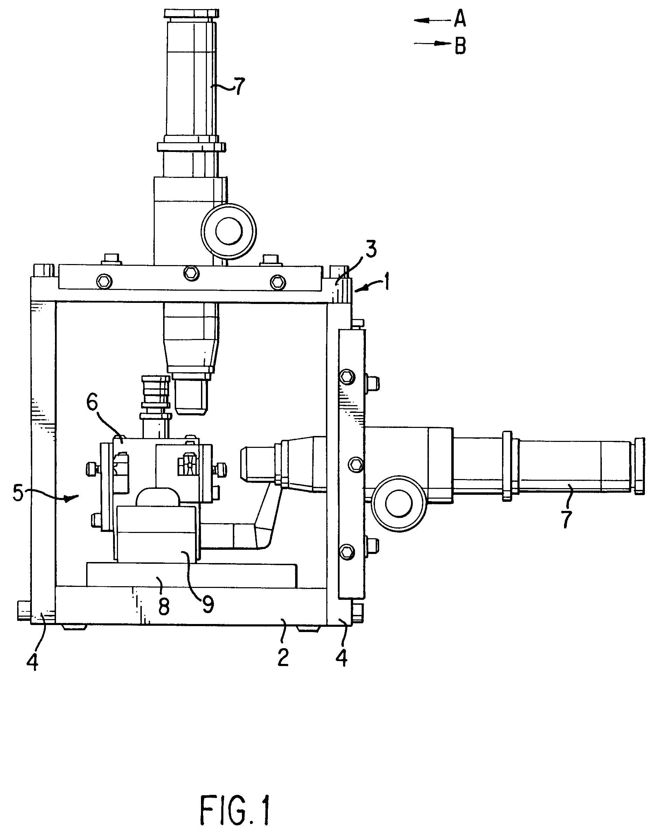

Figure 1          shows an end view of apparatus for use in the manufacture of contact lenses in accordance with the present invention;

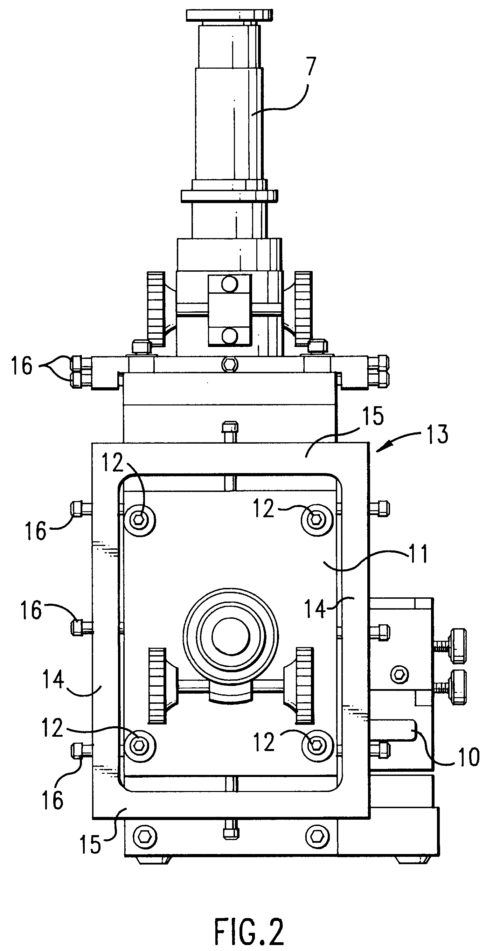

Figure 2          shows a side view in the direction of arrow A of Figure 1 of the apparatus as shown in Figure 1;

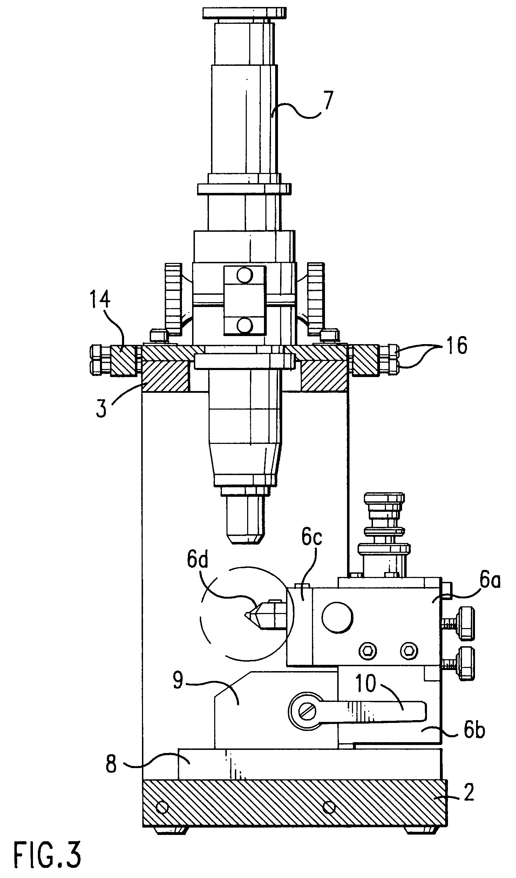

Figure 3          shows a section side view of the apparatus shown in Figure 1 and as illustrated in Figure 2; and

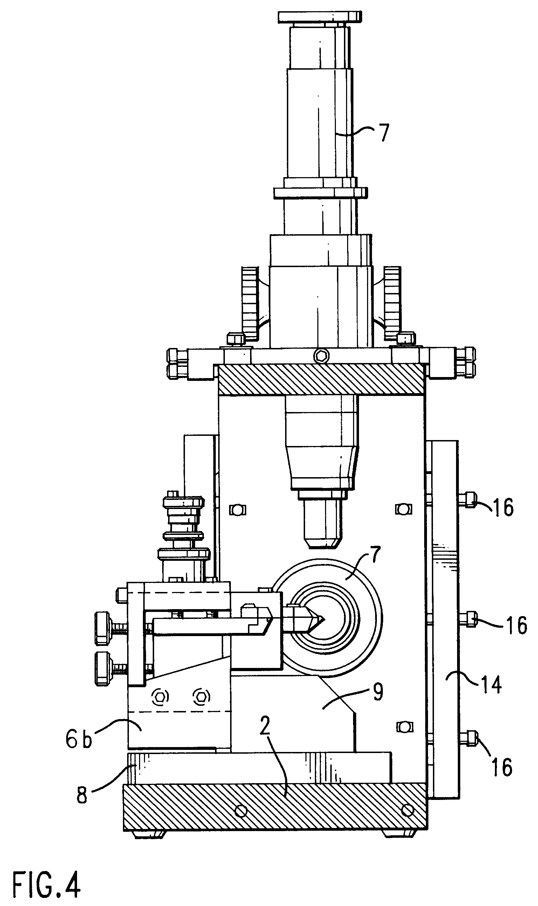

Figure 4          shows a side view in the direction of arrow B of Figure 1 of the apparatus as shown in Figure 1.

Now referring to drawings, apparatus for use in the manufacture of contact lenses made in accordance with the present invention is shown. The particular apparatus which is to be described herein in order to illustrate the present invention is for use in the accurate and precise location of cutters, for use in the lathing of contact lenses, in mounting blocks.

The apparatus comprises:
- a frame 1 which is of substantially rectangular construction which has a base plate 2, a top plate 3, and two side plates 4;
- location means 5 to enable repeated accurate alignment of mounting blocks 6 with respect to the frame 1 provided on the base plate 2; and
- two monoscopes 7 each of which is provided with means to adjust the position of the monoscope relative to the frames.

The frame 1 comprises four plates as detailed above which plates are bolted together to form a rigid structure which holds the apparatus in a fixed structure.

The location means 5 is provided on the base plate 2 of the frame in order to ensure that the mounting blocks 6 of the lathes are held in substantially identical positions where located on the apparatus, and so enable the lathe cutters to be repeatedly located in the same relative position. The location means 5 comprises:
- a base member 8 which is located on the base plate 2 of the frame;
- an abutment block 9 which is located on the base member 8;
and
- two arm members 10 which are mounted on the sides of the base member 8 so that they pivot about an axis.

The base member 8, abutment block 9 and two arm members 10 of the location means 5 define a space into which a part of a mounting block 6 is located so that there is no or very little freedom of movement, thereby accurately locating the mounting block 6 with respect to the frame 1.

In this particular example the mounting block 6 comprises
- a main body section 6a;
- a downwardly extending mounting block 6b, attached to the underside of the main body section 6a;
- a cutter mounting plinth 6c attached to the front of the mounting block 6 and into which the lathe cutter 6d is located and secured; and
- means to secure and align two lathe cutters 6d with respect to the mounting block 6.

As will be well appreciated in the industry lathes for use in the manufacture of contact lenses generally incorporate two lathe cutters mounted in the mounting block 6. These lathe cutters are generally referred to as the Radius and Diametering cutters. It is the Radius cutter that is accurately positioned by use of the apparatus in accordance with the present invention.

With the above described basic form of mounting block 6, the locating means 5 acts by accurately align and position the downwardly extending mounting block 6b in the space defined.

The monoscopes 7 of the apparatus are mounted so that they extend through one of the four plates which define the frame 1. In this particular example the monoscopes are mounted in adjacent plates of the frame so that they have longitudinal axes which are substantially perpendicular to one another, i.e. one extends through the top plate 3 and one extends through one of the side plates 4.

The monoscopes 7 are mounted in the frame in substantially identical fashion so that they extend through the respective plate. In order to mount the monoscopes in the frame each of the monoscopes 7 is mounted in an inner plate 11 and is securely fixed with respect thereto. This is achieved by locating the monoscope 7 in a hole formed in the inner plate 11 so that the inner plate 11 surrounding the hole engages with an abutment on the outer surface of the monoscope. A collar member is then located about the monoscope so that the inner plate is securely held with respect to the monoscope 7.

The monoscope 7 and inner plate 11 assembly is in turn bolted by means of four bolts 12 to the frame 1. The bolts 12 do not hold the monoscope 7 and inner plate 11 assembly rigid with respect to the frame 1 but allow, within very narrow confines, the assembly to be moved with respect to the frame.

A skirt member 13 having two side sections 14 and two end sections 15 is deployed around the inner plate 11. This skirt member is designed so that when correctly positioned about the monoscope 7 its side sections 14 overhang the side of the inner plate 11 and the section of the appropriate (either side or top) plate of the frame immediately adjacent the inner plate, and the end sections 15 overhang the inner plate 11 and the frame 1 immediately adjacent thereto. The skirt member 13 is provided with bolts 16 which extend through the side sections 14 or end sections 15 of the skirt member 13 to engage the side of the inner plate 11 or the respective plate of the frame.

Each of the side sections 14 is provided with three bolts, two of which bolts engage the inner plate 11 and the third of which bolts engages the side of the plate of the frame 1.

The end sections 15 are each provided with two bolts; one of which engages the inner plate 11 and the other of which engages the frame 1.

In use the bolts are adjusted so that they apply a force to the inner plate 11 and the frame 1, it is this force which causes the inner plate 11 and thereby monoscope 7 to move relative to the frame 1 and enables the monoscopes to be correctly positioned with regard to a particular reference point on the mounting block 6 or the cutter of the lathe.

The monoscopes 7 of this particular example have a magnification factor of 60x, and as a consequence of this are each provided with a means which enables the monoscope to be focussed in order to suit the particular user's eyesight.

When the apparatus described above is to be used with respect to a particular lathe which is being used in the production of contact lenses by lathing, the first thing that has to be carried out is the calibrating of the apparatus to suit the lathe in question.

As will be well appreciated in the industry lathes for use in the manufacture of contact lenses generally incorporate two lathe cutters mounted in the mounting block 6. These lathe cutters are generally referred to as the Radius and Diametering cutters. It is the Radius cutter that is accurately positioned by use of the apparatus in accordance with the present invention.

The apparatus is calibrated in the following manner:

- a mounting block 6 and a cutter mounted therein are calibrated to the lathe in the traditional manner so that the radius cutter is calibrated to the correct center and height position;
- the calibrated mounting block 6 and the lathe cutter are now demounted from the lathe and positioned so that the downwardly extending block 6c is located in the space defined by the components of the location means 5, thereby ensuring that the mounting block is correctly aligned and positioned with respect to the frame 1; and
- the two monoscopes are moved relatively with regard to the frame by means of the bolts 16 provided therefor until a reference point on the cutter, for example, the diamond tip, is correctly located in the monoscope.

The calibration of the apparatus in this particular fashion, means that the means which is utilised to calibrate the cutter has itself been directly calibrated on the particular lathe. Therefore, the calibration technique employed is extremely accurate.

Now in order to set and calibrate subsequent lathe cutters for use on the lathe, the following procedure is followed:-

- a mounting block 6 with its associated lathe cutter is located in the location means so that it is in correct alignment; and
- the lathe cutter is adjusted in position until the reference point (for example, the diamond tip) is correctly aligned with regard to the monoscopes.

Once a lathe cutter has been positioned in a mounting block by the above detailed method it is in a fit condition for mounting in the lathe and the lathing accurately of contact lenses. The change over operation which needs to be carried on now is the simple replacement of the mounting blocks 6 with correctly aligned new lathe cutter for the old mounting block. Consequently, the time that the lathe is off line is significantly reduced.

## Claims

1. Apparatus for use in the manufacture of contact lenses by means of lathes which have a lathe cutter which is held in a removable mounting block (6), which apparatus enables the lathe cutter to be accurately set up in the mounting block (6) independently from the lathe, and which apparatus comprises:

   a frame (1);
   a location means (5) which is securely mounted on the frame (1) and into which the mounting block (6) may be accurately located;
   two monoscopes (7) mounted in the frame (1) so that the longitudinal axes of the monoscopes are angularly displaced from one another so as to enable reference means on the lathe cutter to be accurately located in three-dimensional space;
   wherein the relative position of the location means (5) and the monoscopes (7) may be adjusted with respect to one another.

2. Apparatus as claimed in claim 1, in which the frame (1) comprises four plates (2,3,4) which are securely fixed to one another so as to form a hollow structure of substantially rectangular construction wherein the two monoscopes (7) are mounted in adjacent plates (3,4) of the frame (1) so that the longitudinal axes of the monoscopes (7) are 90° angularly displaced from one another.

3. Apparatus as claimed in claim 1 or 2, in which each of the monoscopes (7) is movable relative to the frame (7).

4. Apparatus as claimed in claim 3, wherein each of the monoscopes (7) is mounted in a second plate (11) which is secured to the appropriate part of the frame (3,4) through which the monoscope (7) extends so that some movement of the second plate (11) relative to the frame (3,4) is permissible, and locking means is provided which secures the position of the second plate (11) relative to the frame (3,4), and also allows the position of the second plate (11) relative to the frame (3,4) to be controllably adjusted.

5.  Apparatus as claimed in claim 4, wherein the locking means comprises a sheet member which has two side sections (14) and two end sections (15), each of which sections is provided with two sets of bolts (16) which extend through the section (14,15) and one of which sets of bolts (16) act against the second plate (11) and the other of which acts against the frame (3,4) in the area adjacent to the second plate (11).

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-2 041 385 (INDEX-WERKE KG HAHN & TESSKY) <br> * claim 1; figures * <br> --- | 1,2 | B23Q17/22 <br> B24B13/01 <br> B24B13/00 |
| A | US-A-4 662 075 (MASTEL ET AL.) <br> * abstract; figures * <br> --- | 1 | B24B13/04 |
| A | AU-B-551 713 (HELLA-AUSTRALIAPTY. LTD) <br><br> ----- | | |

TECHNICAL FIELDS SEARCHED (Int. Cl.5 )

B23Q
B24B

The present search report has been drawn up for all claims

| Place of search | Date of completion of the search | Examiner |
|---|---|---|
| THE HAGUE | 19 JUNE 1992 | ESCHBACH D.P.M. |

EPO FORM 1503 03.82 (P0401)